# EUROPÄISCHE PATENTSCHRIFT

(11) **EP 1 075 442 B1**
(45) Veröffentlichungstag und Bekanntmachung des Hinweises auf die Patenterteilung: **16.10.2002**
(21) Anmeldenummer: 99923552.6
(22) Anmeldetag: 06.05.1999
(51) Int. Cl.: B65G 21/10, B65G 47/64

(54) **FÖRDERVORRICHTUNG**
CONVEYOR DEVICE
DISPOSITIF DE TRANSPORT

(30) Priorität: 07.05.1998 DE 29808260 U; 17.08.1998 DE 19837186
(43) Veröffentlichungstag der Anmeldung: 14.02.2001
(73) Patentinhaber: Josef Horstmann Förder- und Palettiertechnik Gesellschaft Mit Beschränkter Haftung, 48477 Hörstel (DE)
(72) Erfinder: HORSTMANN, Josef, D-48477 Hörstel (DE); HORSTMANN, Ludger, D-49479 Ibbenbüren (DE)
(74) Vertreter: Busse & Busse Patentanwälte
(86) Internationale Anmeldenummer: EP9903137
(87) Internationale Veröffentlichungsnummer: WO99057045

(56) Entgegenhaltungen:
- DE-C- 4 341 044
- US-A- 5 168 978

## Beschreibung

Die Erfindung bezieht sich auf eine Fördervorrichtung mit einem Förderband o.dgl. endlosen Förderorgan gemäß dem Oberbegriff des Anspruchs 1.

Eine bekannte Transporteinrichtung dieser Art (DE 43 41 044 C1) weist in einem Gestell ein Förderband als endloses Förderorgan auf, das zwischen zwei Umlenkrollen ein oberes Arbeitstrum und ein unteres Leertrum ausbildet. Im Bereich des Arbeitstrums ist eine als eine Übergabestelle für Warenstückgut wirksame Bandumlenkung vorgesehen, die bei gleichbleibender Förderrichtung eine gruppenweise Weitergabe des Stückgutes bewirkt.

Die Erfindung befaßt sich mit dem Problem, eine Fördervorrichtung der eingangs genannten Art zu schaffen, bei der der Bandablauf in horizontaler Richtung veränderbar ist.

Die Erfindung löst das Problem mit den Merkmalen des Anspruchs 1. Hinsichtlich wesentlicher weiterer Ausgestaltungen wird auf die Ansprüche 2 bis 30 verwiesen.

Die erfindungsgemäße Fördervorrichtung ermöglicht bei Verwendung eines einzigen Förderbandes und eines einzigen Antriebs für dieses dem Arbeitstrum eine Änderung der Förderrichtung vorzugeben, wobei die Vorrichtung mit geringem technischen Aufwand kompakt aufgebaut und für eine Vielzahl von Anwendungsfällen geeignet ist. Auf dem Arbeitstrum bewegte Fördergüter können in ihrer horizontalen Förderrichtung so umgelenkt werden, daß der Gutabgabe- oder Gutaufgabepunkt vorgewählt werden kann. Dabei ist die Vorrichtung auch in abgewinkelten Arbeitsräumen einsetzbar. Durch eine stufenlose Verstellung sind weitgehend beliebige Zwischenpositionen erreichbar, so daß die Fördervorrichtung auch nach Art eines Verteil- oder Sortierbandes eingesetzt werden kann.

Weitere Einzelheiten und Vorteile der Erfindung ergeben sich aus der nachfolgenden Beschreibung und den Zeichnungen, die mehrere Ausführungsbeispiele der erfindungsgemäßen Fördervorrichtung veranschaulichen. In der Zeichnung zeigen:
- Fig. 1: eine Seitenansicht einer erfindungsgemäßen Fördervorrichtung in einer Schnittdarstellung gemäß einer Linie I-I in Fig. 4,
- Fig. 2: eine Draufsicht eines in eine Umlenkstellung verschwenkten endlosen Förderbandes der Fördervorrichtung,
- Fig. 3: eine geschnittene Seitenansicht ähnlich Fig. 1 mit geänderter Umlenkkonstruktion für das Förderband,
- Fig. 4: eine Draufsicht der Fördervorrichtung gemäß Fig. 3 in unverschwenkter Ausgangsstellung,
- Fig. 5: eine Draufsicht der Fördervorrichtung gemäß Fig. 4 mit verschwenktem Teilbereich des Förderbandes,
- Fig. 6 und Fig. 7: eine jeweilige Seitenansicht der Fördervorrichtung ähnlich Fig. 1 mit weiteren Ausführungsformen der Förderband-Umlenkung,
- Fig. 8: eine Seitenansicht der Fördervorrichtung ähnlich Fig. 7 mit Teilbereichen, die von jeweils einem Förderband gebildet sind, und
- Fig. 9: eine Draufsicht auf die Fördervorrichtung ähnlich Fig. 2, wobei diese als Teil eines Verteil- oder Sortiersystems vorgesehen ist.

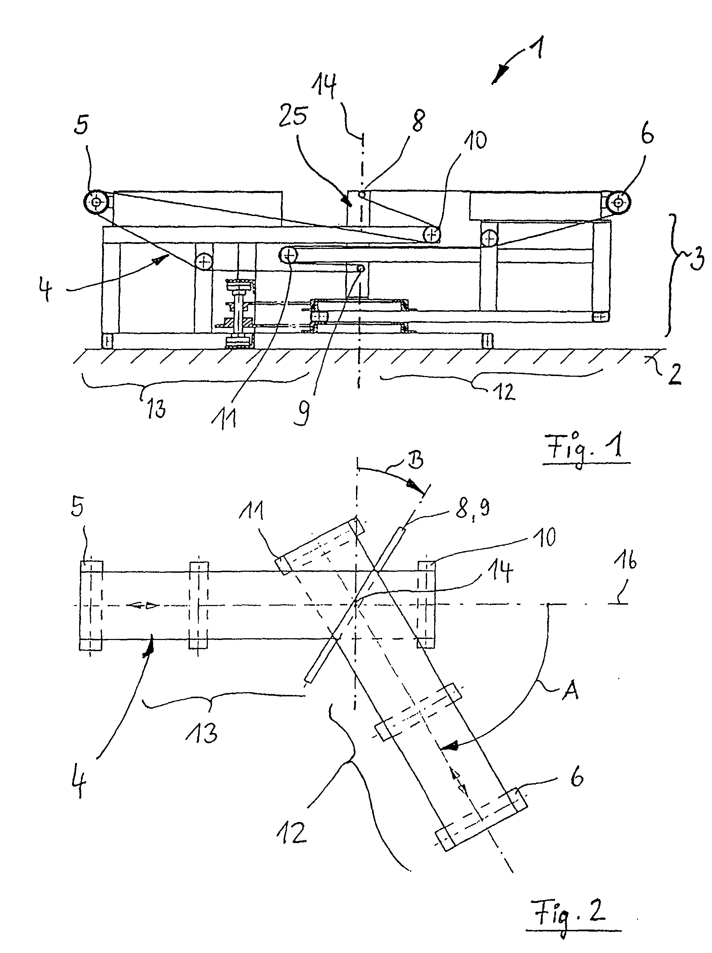

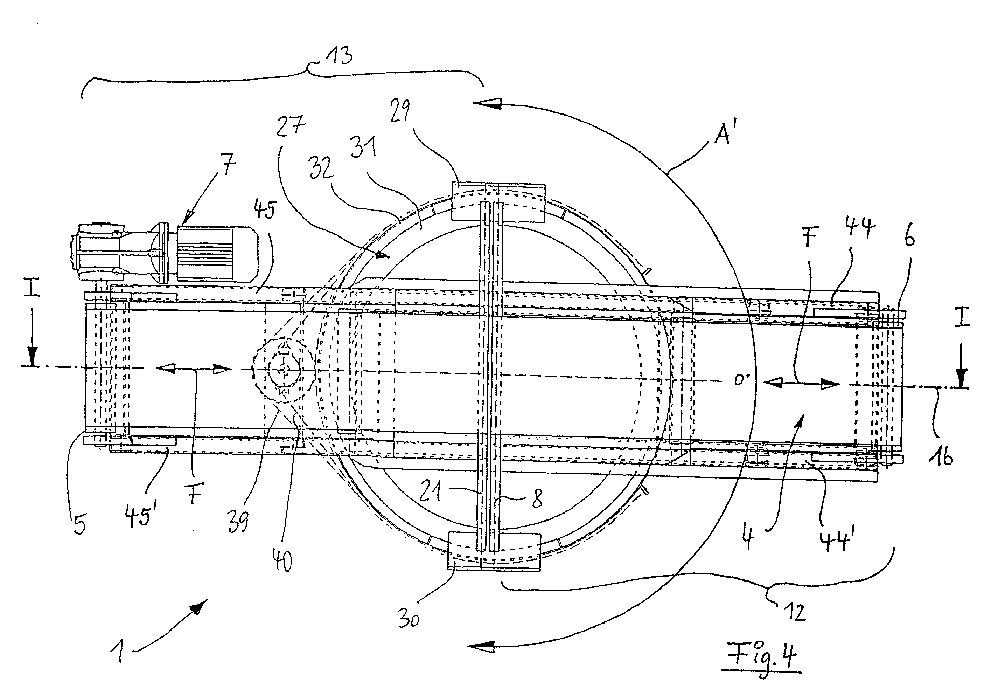

In Fig. 1 ist eine insgesamt mit 1 bezeichnete, auf dem Boden 2 über ein Gestell 3 abgestützte Fördervorrichtung in einer geschnittenen Seitenansicht dargestellt, die mit einem Förderband 4 als endloses Förderorgan versehen ist. Dieses Förderband 4 ist über zwei gestellseitig abgestützte Hauptumlenkrollen 5, 6 geführt und bildet zwischen diesen ein oberes Arbeitstrum und ein unteres Leertrum aus. Zumindest eine der Hauptumlenkrollen 5, 6 ist dabei mit einem Antriebsorgan 7 (Fig. 4) versehen.

Das in der Fördervorrichtung 1 aufgenommene Förderband 4 ist durch jeweils eine von einer Umlenkkante 8 und 9 sowie einer dieser zugeordneten Umlenkrolle 10 und 11 gebildete Bandschleife in zwei Teilbereiche 12 und 13 unterteilt, so daß sich jeweilige Teile des Förderbandes 4 zwischen den im Arbeitstrum und im Leertrum vorgesehenen Bandschleifen erstrecken. Die Bandschleifen sind dabei in der Fördervorrichtung 1 derart übereinander angeordnet, daß einer der sich zwischen den zwei Bandschleifen erstreckenden Teilbereiche des Förderbandes 4 relativ zum anderen Teilbereich um eine Hochachse 14 schwenkbar ist.

Die Einzeldarstellung des Verlaufs des Förderbandes 4 gemäß Fig. 2 verdeutlicht, daß beim Schwenken des einen Teilbereiches 12 der Vorrichtung (Schwenkrichtung gemäß Pfeil A) die beiden übereinanderliegenden Umlenkkanten 8 und 9 mit einem Winkel (dargestellt mit einem Pfeil B) horizontal mitverschwenkt werden, der im Verhältnis 2:1 untersetzt ist.

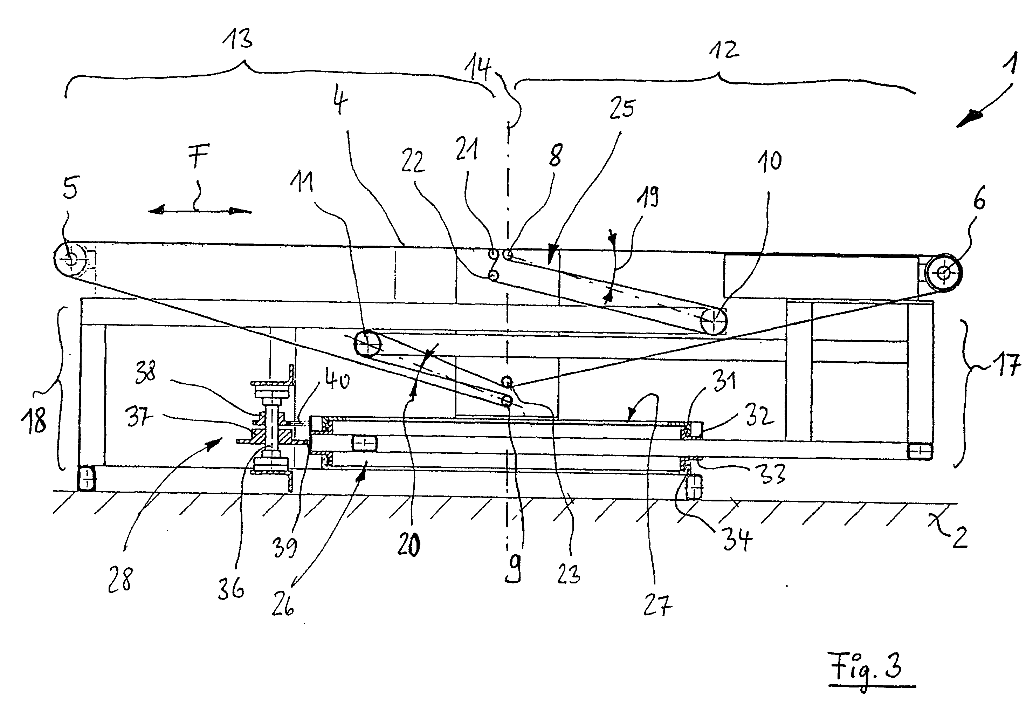

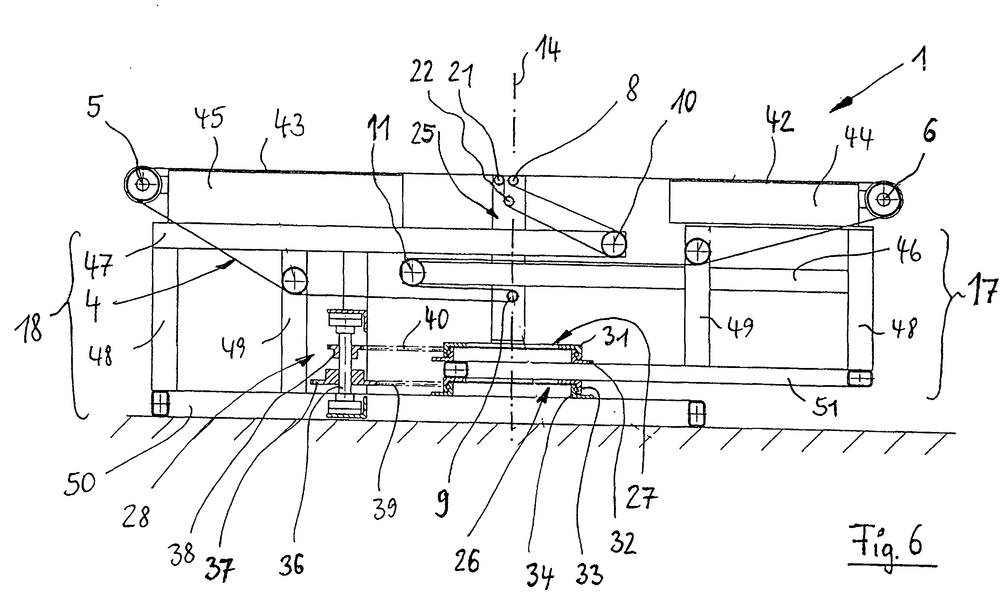

Die in Fig. 3 bis 7 in weiteren Ausführungsformen dargestellte Fördervorrichtung 1 ist an unterschiedliche Einsatzfälle mit geringem Aufwand anpaßbar, da die Teilbereiche 12 und 13 des Förderbandes 4 um die Hochachse 14 relativ zueinander verschwenkbar sind und damit eine kundenspezifische Anpassung an unterschiedliche Einbau- und Förderkonzepte möglich ist.

Die in Fig. 4 in Draufsicht dargestellte Fördervorrichtung 1 zeigt eine geradlinig fluchtende Ausgangsstellung, wobei die Hochachse 14 in der Mittellängsebene 16 des Förderbandes 4 gelegen ist und die übereinanderliegenden Umlenkkanten 8, 9 senkrecht schneidet. Mit einem Schwenkpfeil A' ist verdeutlicht, daß der schwenkbare Teilbereich 12 des Förderbandes 4 um zumindest 90° beidseits der Mittellängsebene 16 verschwenkbar ist. Diese Schwenkbewegung ist auch bei gleichzeitig zugeschaltetem Bandantrieb im Bereich des Antriebsorgans 7 möglich, so daß beispielsweise eine bogenförmige Gutverteilung mit der Fördervorrichtung 1 realisiert werden kann. Von Vorteil ist dabei ebenfalls, daß der schwenkbare Teilbereich 12 der Vorrichtung 1 stufenlos verstellt werden kann.

Die flexible Verwendbarkeit der erfindungsgemäßen Fördervorrichtung 1 ist außerdem dadurch verbessert, daß deren mit Pfeilen F veranschaulichte Föderrichtung im reversierenden Betrieb einsetzbar und das endlose Förderband 4 umschaltbar ist.

Das Gestell 3 der Fördervorrichtung 1 ist aus zwei eine Baueinheit bildenden Gestellteilen 17 und 18 aufgebaut, die jeweils einen der Teilbereiche 12, 13 des Förderbandes 4 abstützen. Die beiden Gestellteile 17 und 18 sind unter Bildung der Hochachse 14 (Fig. 3) gelenkig verbunden, so daß diese Abstützung mit den Umlenkungsbedingungen im Bereich der Bandschleifen einen weitgehend verzerrungsfreien Förderdurchlauf des Bandes 4 auch bei Umformung im Bereich der Umlenkkanten 8, 9 ermöglicht. Im Bereich der beiden Bandschleifen sind die Umlenkbedingungen für das Förderband 4 für einen optimalen Durchlauf so gestaltet, daß auch bei hohen Zugkräften ein Bandabwurf vermieden ist. Das sich jeweils von der Umlenkrolle 10, 11 zur zugeordneten Umlenkkante 8, 9 erstreckende Bandstück ist dabei so angeordnet, daß mit dem andererseits an die Umlenkkante 8, 9 angrenzenden Bandstück jeweils ein spitzer Winkel 19, 20 gebildet ist.

Bei der Fördervorrichtung 1 gemäß Fig. 3 verläuft die obere Bandschleife im Bereich des Arbeitstrums zwischen zwei Umlenkkanten 8 und 21, die einander parallel in geringem Abstand in gleicher Ebene gegenüberliegen und beim Schwenken des einen Teilbereichs 12 gemeinsam die Schwenkbewegung ausführen. Der zweiten Umlenkkante 21 ist dabei eine die Bandschleife auslenkende Führungskante bzw. - rolle 22 zugeordnet. Im Bereich der unteren Bandschleife ist eine zu deren Umlenkkante 9 im geringen Abstand zugeordnete weitere Führungskante 23 für einen gleichmäßigen Bandlauf vorgesehen.

Die Schnittdarstellungen gemäß Fig. 1, 3, 6 und 7 verdeutlichen die Abstützung der Umlenkkanten 8, 9, 21, 22, 23, die sämtlich an einem gemeinsamen Träger 25 abgestützt sind. Die die Bandschleifen bildenden Bauteile sowie das schwenkbare und das ortsfeste Gestellteil 12, 13 sind zur Ausführung der Schwenkbewegungen durch einen Drehkranz 26 verbunden und der Träger 25 für die vorgenannten Umlenkkanten ist über einen zweiten koaxialen Drehkranz 27 auf dem schwenkbaren Gestellteil 17 abgestützt.

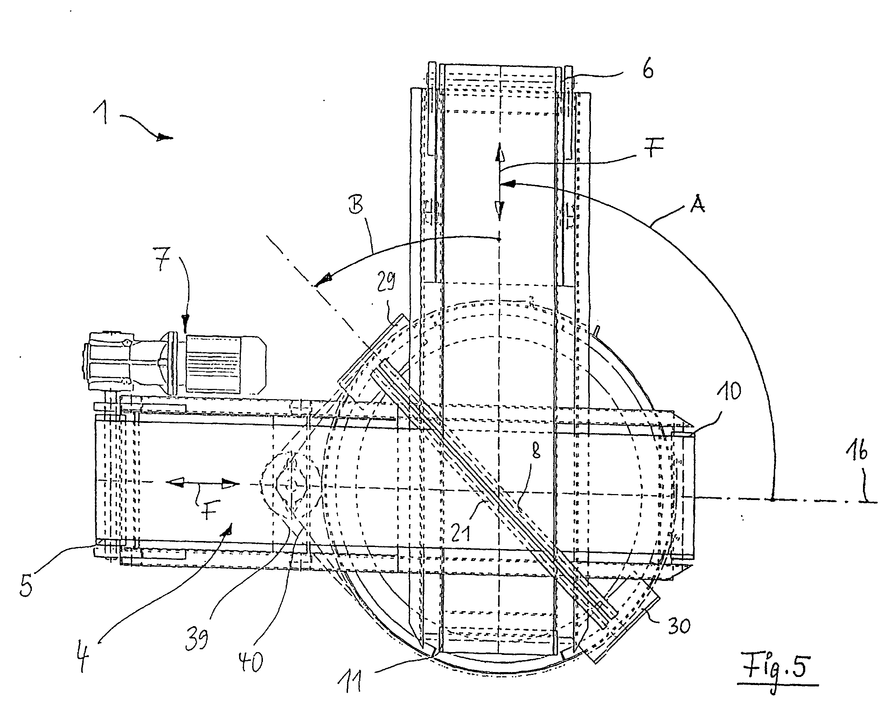

Im Bereich dieser Drehkranz-Abstützung ist eine insgesamt mit 28 bezeichnete Übersetzungseinheit, insbesondere in Form eines Untersetzungsgetriebes, vorgesehen, das bei einer Schwenkbewegung des schwenkbaren Gestellteils 17 dem Träger 25 eine gleichgerichtete, jedoch im Verhältnis 2:1 untersetzte Schwenkbewegung vorgibt (Fig. 5).

Die Draufsicht gemäß Fig. 4 verdeutlicht, daß der Träger 25 zwei die Umlenkkanten 8, 9, 21, 22, 23 in paralleler Übereinanderlage abstützende, gegenüberliegende Vertikalstreben 29, 30 aufweist, die mit einem Stützring 31 des Trägerdrehkranzes 27 relativ zu dessen Führungsring 32 auf dem schwenkbaren Gestellteil 17 schwenkbar sind. Gleichzeitig ist dabei das schwenkbare Gestellteil 17 mit einem Stützring 33 des Gestelldrehkranzes 26 auf dessen Führungsring 34 bodenseitig abgestützt.

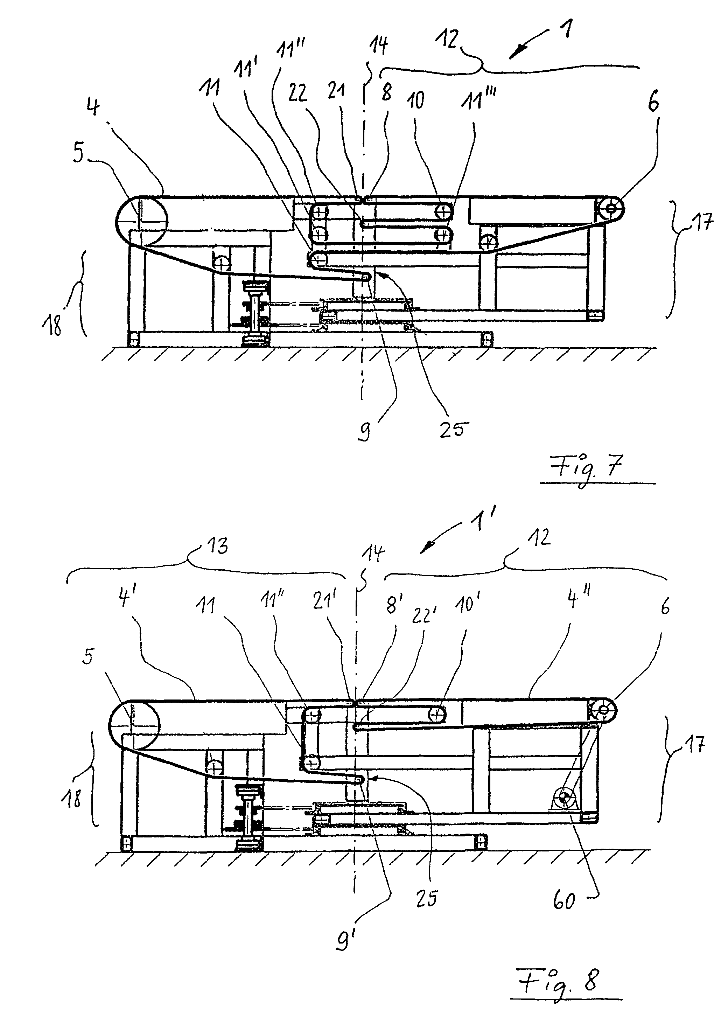

Der Aufbau dieser Stützkonstruktion (Fig. 3, Fig. 6 und Fig. 7) verdeutlicht in Zusammenschau mit Fig. 2, daß die der Umlenkkante 8 des Arbeitstrums zugeordnete Umlenkrolle 10 beim Schwenkvorgang ortsfest abgestützt verbleibt und die der Umlenkkante 9 des Leertrums zugeordnete Umlenkrolle 11 (bzw. 11', 11'', 11''' in Fig. 7) mit dem schwenkbaren Gestellteil 17 mitschwenkbar abgestützt ist.

Als Untersetzungsgetriebe 28 sind in zweckmäßiger Ausführung zwei fest auf einer vertikalen Welle 36 angeordnete Zahnkränze 37, 38 mit im Verhältnis 2:1 unterschiedlichem Durchmesser vorgesehen, wobei der größere Zahnkranz 37 über eine Kette 39 mit dem Stützring 33 des Gestelldrehkranzes 26 verbunden ist und der kleinere Zahnkranz 38 über eine Kette 40 mit dem Stützring 31 des Trägerdrehkranzes 27 zusammenwirkt. An Stelle dieser Kette 39, 40 ist auch die Verwendung von Zahnriemen o. dgl. denkbar.

Mit der vorbeschriebenen Zwangssteuerung kann der schwenkbare Gestellteil 12 von Hand verschwenkt werden. Für eine verbesserte Ausführung ist denkbar, daß der Welle 36 des Untersetzungsgetriebes 28 ein Stellantrieb (nicht dargestellt) zugeordnet wird, so daß eine automatische Schwenksteuerung für die unterschiedlichen Einsatzbedingungen der Fördervorrichtung verfügbar ist. Ebenso ist denkbar, die Fördervorrichtung 1 bzw. dessen Gestell 3 über einen zusätzlichen, nicht näher dargestellten Drehkranz auf dem Boden 2 abzustützen, so daß auf diesem wahlweise die Verstellung des Gestellteiles 17 oder 18 möglich ist und damit eine Verteilung oder Zusammenführung von Stückgut über einen Winkelbereich von 360° erreicht wird.

Für den Einsatz der Fördervorrichtung 1 im Bereich der Lebensmittelindustrie o. dgl. können die Gestellteile 17 und 18 mit einer Schutzverkleidung versehen sein und zur Erhöhung der Bandlaufsicherheit ist denkbar, den Umlenkrollen 5, 6, 10, 11 und/oder den Umlenkkanten 8, 9, 21, 22, 23 jeweilige Bandleitglieder (nicht dargestellt) zuzuordnen, mit denen die Führung des Förderbandes 4 langzeitstabil gesichert ist.

Die Lebensdauer des Förderbandes 4 ist auch von dessen optimaler Straffung abhängig, zu deren Herstellung im Bereich der Umlenkkanten und/oder Umlenkrollen ein oder mehrere Bandspanner (nicht dargestellt) in die Vorrichtung 1 integriert sein können. Ebenso ist denkbar, daß für eine reibungsarme und damit verschleißmindernde Führung des Förderbandes 4 im Bereich der Umlenkkanten und/oder der Umlenkrollen jeweilige Auslaßöffnungen (nicht dargestellt) vorgesehen sind, über die ein das Förderband 4 untergreifendes Luftpolster mittels einer Druckluftzufuhr gebildet werden kann.

Die Fördervorrichtung 1 kann mit den vorbeschriebenen Konstruktionsteilen für die Bandschwenkung im Bereich des Gestelles 3 mit weitgehend beliebigen Stütz- und Tragteilen ausgeführt sein. In den dargestellten Ausführungsformen sind die beiden Gestellteile 17 und 18, bei im wesentlichen symmetrischem Aufbau, jeweils mit einer das Förderband 4 bereichsweise untergreifenden, oberen Stützplatte 42, 43 versehen, die über jeweils paarweise gegenüberliegende Stützschenkel 44, 44'; 45, 45' an einem jeweiligen Längsbalken 46, 46'; 47, 47' abgestützt sind. Diese Längsbalken 46, 46'; 47, 47' nehmen paarweise gegenüberliegend am freien Ende die jeweilige Umlenkrolle 10 bzw. 11 der Bandschleife auf.

Die Längsbalken 47, 47' im Bereich des ortsfesten Gestellteils 18 sind über vertikale Stützen 48, 49 mit bodenseitig aufliegenden Rahmenteilen 50 verbunden. Die Längsbalken 46, 46' im Bereich des schwenkbaren Gestellteils 17 sind über deren vertikale Stützen 48, 49 mit einem den Drehkranz 27 tragenden Längsbalken 51 verbunden. Diese konstruktive Gestaltung des Gestells 3 kann, beispielsweise in Abhängigkeit von dem auf dem Arbeitstrum des Förderbandes 4 aufzunehmenden Gewicht, kundenspezifisch angepaßt werden.

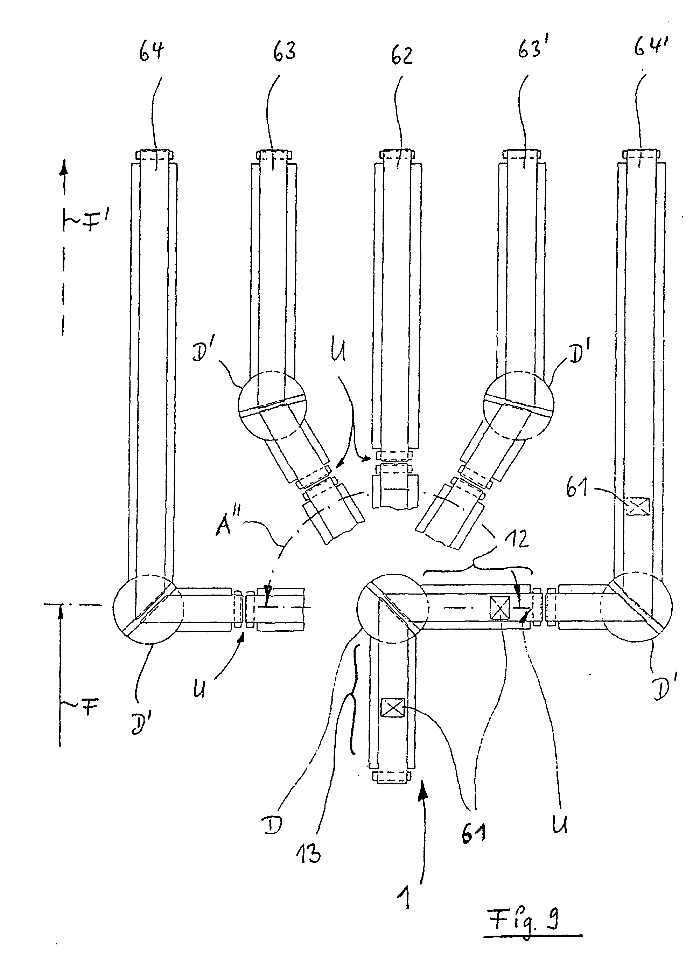

In Fig. 8 ist die Fördervorrichtung 1' in einer Ausführung dargestellt, bei der den beiden Teilbereichen 12 und 13 jeweils ein einen Antrieb 7 bzw. 60 aufweisendes Einzel-Förderband 4' bzw. 4'' zugeordnet ist. Das Förderband 4'' ist als schwenkbarer Teilbereich 12 mittels des Gestellteils 17 verschwenkbar, wobei die Umlenkrolle 10' ortsfest über das Gestellteil 18 gehalten ist und die Umlenkkanten 8', 9', 21' und 22' mit dem gemeinsamen Träger 25 in der vorbeschriebenen Art und Weise verlagert werden. Auch bei dieser konstruktiven Variante der Fördervorrichtung 1' ist gewährleistet, daß das Förderband 4' bzw. 4'' im Arbeistrum jeweils eine Umlenkkante 8' bzw. 21' überläuft und bei Verschwenkung eines Teilbereiches, beispielsweise des Teilbereiches 12, im Leertrum des Förderbandes 4'' durch eine Verschwenkung zumindest einer der Hilfs-Umlenkkanten (hier: 22') dem Förderband 4'' eine den Schrägverlauf (ähnlich Fig. 5) an den verschwenkten Umlenkkanten 8' und 21' ausgleichender Schrägverlauf vermittelt wird. Dieser Ausgleich des Schrägverlaufs des Förderbandes 4'' ist vergleichbar mit dem in Fig. 7 dargestellten Ausgleich an dem endlosen Förderband 4 im Teilbereich 12.

In Fig. 9 ist die Fördervorrichtung 1 als Bestandteil eines Systems zum Verteilen bzw. zum Zusammenführen von Stückgütern 61 innerhalb eines Materialflußsystems dargestellt. Beim Verteilen eines Stückgutstromes werden die Stückgüter 61 auf einen Teilbereich 13 aufgegeben und dann über den schwenkbaren zweiten Teilbereich 12 auf periphere Fördermittel 62, 63, 64 bzw. 63', 64' übergeben. Die Prinzipdarstellung gemäß Fig. 9 verdeutlicht, daß dabei der schwenkbare Teilbereich 12 der Fördervorrichtung 1 um bis zu 90° zu beiden Seiten in weitgehend freiwählbare Positionen schwenkbar ist. Zur Durchführung dieser Verteilung bzw. Zusammenführung von Stückgutströmen ist der schwenkbare Teilbereich 12 mittels einer Steuerung oder Regelung automatisch verstellbar (nicht dargestellt). In einer weiteren denkbaren Ausführungsform kann die Fördervorrichtung 1 in zumindest einem der Teilbereiche 12 bzw. 13 teleskopierbar sein oder zumindest einer der Teilbereiche zusätzlich in einer vertikalen Ebene schwenkbar ausgebildet werden (nicht dargestellt).

Die Fördervorrichtung 1 ermöglicht zunächst eine lineare Förderstrecke F und dann um einen Drehpunkt D eine Winkelverstellung von 90°, stufenlos nach links oder rechts. Somit kann ab diesem Drehpunkt D die Förderung in eine einstellbare Richtung wiederum linear bis zu einer Umkehrstation U des Förderbandes fortgesetzt werden, wo sodann die Übergabe auf eines der bereitstehenden Fördermittel 62 bis 64 erfolgt. Auch dieses Fördermittel kann der vorgeschalteten Fördervorrichtung 1 entsprechen, wobei deren Drehpunkt D' lediglich die Ablenkung in eine bestimmte Förderrichtung F' bewirkt.

Ausgehend von der Fördervorrichtung mit dem stufenlos einstellbaren Drehpunkt D, D' kann natürlich die Stückgutförderung radial in beliebige Richtungen erfolgen, wobei die Anzahl der nachgeschalteten Förderer 62 bis 64 von deren Baubreite und den erforderlichen Zwischenräumen abhängig ist. Die Installation der erfindungsgemäßen Fördervorrichtung kann auch auf einer geneigten Ebene (nicht dargestellt) erfolgen, wobei die Reibwerte zwischen den Stückgütern und dem Förderband einen Grenzwert markieren.

Bezogen auf die Fördervorrichtung für einen Verteilungsvorgang eines Förderstromes auf mehrere nachgeschaltete Förderlinien kann bei Wechsel der Förderrichtung (nicht dargestellt) auch eine Zusammenführung von mehreren Förderströmen zu einem gemeinsamen Förderstrom erfolgen, wobei spezielle Verteilungs- oder Zusammenführungsstrategien berücksichtigt werden.

In weiterer Ausgestaltung der Fördervorrichtung 1, 1' ist denkbar, daß diese mit einer Regeleinrichtung für die Geschwindigkeit des Förderbandes 4 bzw. der Bänder 4', 4'' versehen ist und damit in den Teilbereichen 12, 13 unterschiedliche Transportgeschwindigkeiten und -richtungen erreicht werden können. Im Bereich der gegenüberliegenden Umlenkkanten 8, 21; 8', 21' ist auch deren vertikale Verstellbarkeit denkbar, so daß mit einem geringen Stufenversatz in der Förderebene zusätzlich zu der mit der Winkeleinstellung der Fördervorrichtung 1, 1' vorgesehenen Grundrichtung (z. B. 45° oder 90°) die Bewegung von Stückgut auf dem Förderband beeinflußt werden kann.

## Patentansprüche

1. Fördervorrichtung mit einem Gestell (3), zwei Hauptumlenkrollen (5, 6), von denen zumindest eine angetrieben ist, den Hauptumlenkrollen (5, 6) zugeordneten Hilfsumlenkrollen (10, 11) und zumindest einem Förderband (4) o.dgl. endlosen Förderorgan, das zwischen den Hauptumlenkrollen (5, 6) ein oberes Arbeitstrum und ein unteres Leertrum ausbildet, **dadurch gekennzeichnet, daß** das Förderband (4; 4'; 4") im Bereich des Arbeitstrums und des Leertrums jeweils zumindest eine Umlenkkante (8, 9) umläuft, die im Arbeitstrum und im Leertrum zwei Teilbereiche (12, 13) abteilen, ein Teilbereich (12) des Förderbandes (4; 4'') relativ zum anderen Teilbereich (13) um eine den Umlenkkanten (8, 9; 8, 21; 8', 21') mittig zugeordnete gemeinsame Hochachse (14) schwenkbar ist, und bei Schwenken (Pfeil A) des einen Teilbereichs (12) des Förderbandes (4; 4'; 4") die Umlenkkanten (8, 9; 8, 21; 8', 21') mit einem Winkel (Pfeil B) mitverschwenkt werden, der im Verhältnis 2:1 untersetzt ist.

2. Fördervorrichtung nach Anspruch 1, **dadurch gekennzeichnet, daß** das Förderband (4; 4'; 4'') im Arbeitstrum jeweils eine Umlenkkante (8, 21; 8', 21') überläuft, die Umlenkkanten gemeinsam um die mittige Hochachse (14) verschwenkbar sind, und im Leertrum des Förderbandes (4, 4') durch eine Verschwenkung zumindest einer Hilfsumlenkkante (9, 22; 9', 22') dem Förderband (4; 4') ein den Schrägverlauf an den verschwenkten Umlenkkanten (8, 21; 8', 21') ausgleichender Schrägverlauf vermittelt wird.

3. Fördervorrichtung nach Anspruch 1 oder 2, **dadurch gekennzeichnet, daß** ein einziges endloses Förderband (4) vorgesehen ist.

4. Fördervorrichtung nach einem der Ansprüche 1 bis 3, **dadurch gekennzeichnet, daß** die Teilbereiche (12, 13) des Förderbandes (4) um eine Hochachse (14) relativ zueinander verschwenkbar sind, die bei geradlinig flüchtender Ausgangsstellung in der Mittellängsebene (16) des Förderbandes (4) gelegen ist und die übereinanderliegenden Umlenkkanten (8, 9) senkrecht schneidet.

5. Fördervorrichtung nach Anspruch 4, **dadurch gekennzeichnet, daß** der schwenkbare Teilbereich (12) des Förderbandes (4) bei gleichzeitigem Bandantrieb um die Hochachse (14) beidseits der Mittellängsebene (16) um zumindest 90° verschwenkbar ist.

6. Fördervorrichtung nach einem der Ansprüche 1 bis 5, **dadurch gekennzeichnet, daß** der schwenkbare Teilbereich (12) stufenlos verstellbar ist.

7. Fördervorrichtung nach einem der Ansprüche 1 bis 6, **dadurch gekennzeichnet, daß** die Förderrichtung (F) des endlosen Förderbandes (4) umschaltbar ist.

8. Fördervorrichtung nach einem der Ansprüche 1 bis 7, **dadurch gekennzeichnet, daß** beide Teilbereiche (12, 13) des Förderbandes (4) jeweils von einem eine Baueinheit bildenden Gestellteil (17, 18) abgestützt und beide Gestellteile (17, 18) unter Bildung der Hochachse (14) gelenkig verbunden sind.

9. Fördervorrichtung nach einem der Ansprüche 1 bis 8, **dadurch gekennzeichnet, daß** das Förderband (4) zwischen seinen Teilberrichen (12,13) des Arbeits- und des Leertrums eine Bandschleife durchläuft und im Bereich der beiden Bandschleifen das sich jeweils von der Umlenkrolle (10, 11) zur zugeordneten Umlenkkante (8, 9) erstreckende Bandstück mit dem andererseits an die Umlenkkante (8, 9) angrenzenden Bandstück jeweils einen spitzen Winkel (19, 20) einschließt.

10. Fördervorrichtung nach Anspruch 9, **dadurch gekennzeichnet, daß** die obere Bandschleife im Bereich des Arbeitstrums zwischen zwei Umlenkkanten (8, 21) verläuft, die einander parallel in geringem Abstand in gleicher Ebene gegenüberliegen und beim Schwenken des einen Teilbereichs (12) gemeinsam eine Schwenkbewegung ausführen, wobei der zweiten Umlenkkante (21) eine die Bandschleife auslenkende Führungskante (22) bzw,. -rolle zugeordnet ist.

11. Fördervorrichtung nach einem der Ansprüche 1 bis 10, **dadurch gekennzeichnet, daß** die Umlenkkanten (8, 9, 22, 23) an einem gemeinsamen Träger (25) abgestützt sind.

12. Fördervorrichtung nach Anspruch 11, **dadurch gekennzeichnet, daß** die die Bandschleife bildenden Bauteile, das schwenkbare und das ortsfeste Ge-. stellteil (17, 18) durch einen Drehkranz (26) gelenkig verbunden sind und der Träger (25) für die Umlenkkanten (8, 9, 22, 23) über einen koaxialen Drehkranz (27) *auf* dem schwenkbaren Gestellteil (17) abgestützt ist.

13. Fördervorrichtung nach Anspruch 12, **dadurch gekennzeichnet, daß** eine als Untersetzungsgetriebe (28) ausgebildete Übersetzungseinheit vorgesehen ist, das bei einer Schwenkbewegung des schwenkbaren Gestellteils (17) dem Träger (25) eine gleichgerichtete, jedoch im Verhältnis 2:1 untersetzte Schwenkbewegung (Pfeile A und B) vorgibt.

14. Fördervorrichtung nach einem der Ansprüche 12 bis 13, **dadurch gekennzeichnet, daß** der Träger (25) zwei die Umlenkkanten (8, 9) in paralleler Übereinanderlage abstützende, gegenüberliegende Vertikalstreben (29, 30) aufweist, die mit einem Stützring (31) des Trägerdrehkranzes (27) relativ zu dessen Führungsring (32) auf dem schwenkbaren Gestellteil (17) schwenkbar sind und das schwenkbare Gestellteil (17) mit einem Stützring (33) des Gestelldrehkranzes (26) auf dessen Führungsring (34) bodenseitig abgestützt ist.

15. Fördervorrichtung nach einem der Ansprüche 8 bis 14, **dadurch gekennzeichnet, daß** die der Umlenkkante (8) des Arbeitstrums zugeordnete Umlenkrolle (10) beim Schwenkvorgang ortsfest abgestützt verbleibt und die der Umlenkkante (9) des Leertrums zugeordnete Umlenkrolle (11) mit dem schwenkbaren Gestellteil (17) mitschwenkbar abgestützt ist.

16. Fördervorrichtung nach einem der Ansprüche 14 bis 15, **dadurch gekennzeichnet, daß** als Untersetzungsgetriebe (28) zwei fest auf einer vertikalen Welle (36) angeordnete Zahnkränze (37, 38) mit im Verhältnis 2:1 unter-schiedlichem Durchmesser bzw. Zähnezahl vorgesehen sind, wobei der größere Zahnkranz (37) über eine Kette (39) mit dem Stützring (33) des Gestelldrehkranzes (26) verbunden ist und der kleinere Zahnkranz (38) über eine Kette (40) mit dem Stützring (31) des Trägerdrehkranzes (27) zusammenwirkt.

17. Fördervorrichtung nach Anspruch 16, **dadurch gekennzeichnet, daß** ein Stellantrieb vorgesehen ist, der die Welle (36) des Untersetzungsgetriebes (28) antreibt.

18. Fördervorrichtung nach einem der Ansprüche 1 bis 17, **dadurch gekennzeichnet, daß** das Gestell (3) über einen zusätzlichen Drehkranz auf dem Boden (2) abgestützt ist.

19. Fördervorrichtung nach einem der Ansprüche 8 bis 18, **dadurch gekennzeichnet, daß** die Gestellteile (17, 18) jeweils mit einer Schutzverkleidung versehen sind.

20. Fördervorrichtung nach einem der Ansprüche 1 bis 19, **dadurch gekennzeichnet, daß** den Umlenkrollen (5, 6, 10, 11; 11', 11'', 11''') und/oder den Umlenkkanten (8, 9, 21, 22, 23; 8', 9', 21', 22') Bandleitglieder zugeordnet sind.

21. Fördervorrichtung nach einem der Ansprüche 1 bis 20, **dadurch gekennzeichnet, daß** diese im Bereich der Umlenkkanten (8, 9, 21, 22, 23; 8', 9', 21', 22') und/oder Umlenkrollen (5, 6, 10, 11; 11', 11'', 11''') einen oder mehrere Bandspanner aufweist.

22. Fördervorrichtung nach einem der Ansprüche 1 bis 21, **dadurch gekennzeichnet, daß** diese im Bereich der Umlenkkanten (8, 9, 21, 22, 23; 8', 9', 21', 22') und/oder der Umlenkrollen (5, 6, 10, 11; 11', 11'', 11''') mit ein Luftpolster für das Förderband (4) bildenden Auslaßöffnungen versehen ist.

23. Fördervorrichtung nach Anspruch 1 oder 2, **dadurch gekennzeichnet, daß** die Teilbereiche (12, 13) jeweils von einem einzeln antreibbaren Förderband (4'; 4") gebildet sind.

24. Fördervorrichtung nach einem der Ansprüche 1 bis 23, **dadurch gekennzeichnet, daß** sie Bestandteil eines Sytems zum Verteilen bzw. zum Zusammenführen von Stückgutströmen innerhalb von Materialflußsystemen ist, beim Verteilen eines Stückguststroms die Stückgüter (61) auf einen Teilbereich (13) aufgegeben werden und dann über den schwenkbaren zweiten Teilbereich (12) auf periphere Fördermittel (62, 63, 64, 63', 64') übergehen, wobei der schwenkbare Teilbereich (12) um bis zu 90° zu beiden Seiten schwenkbar ist.

25. Fördervorrichtung nach Anspruch 24, **dadurch gekennzeichnet, daß** zur Durchführung von Verteilungen und Zusammenführungen der schwenkbare Teilbereich (12) mittels einer Steuerung oder Regelung verstellbar ist.

26. Fördervorrichtung nach Anspruch 24 oder 25, **dadurch gekennzeichnet, daß** zumindest ein Teilbereich (12, 13) teleskopierbar ist.

27. Fördervorrichtung nach einem der Ansprüche 24 bis 26, **dadurch gekennzeichnet, daß** zumindest ein Teilbereich zusätzlich zu einer vertikalen Ebene schwenkbar ist.

28. Fördervorrichtung nach einem der Ansprüche 1 bis 27, **dadurch gekennzeichnet, daß** die Teilbereiche (12, 13) mit einer die Geschwindigkeit der jeweiligen Bandschleife steuernden Regelung versehen sind.

29. Fördervorrichtung nach einem der Ansprüche 1 bis 28, **dadurch gekennzeichnet, daß** zumindest die in der Förderebene im Bereich der Hochachse (14) gegenüberliegenden Umlenkkanten (8, 21; 8', 21') einzeln vertikal verstellbar sind.

## Claims

1. Conveyor device with a frame (3), two main deflection rollers (5, 6) of which at least one is driven, the auxiliary deflection rollers (10, 11) assigned to the main deflection rollers (10, 11) and at least one conveyor belt (4) or a similar endless conveyor organ which provides an upper working strand and a lower return strand between the main deflection rollers (5, 6), **characterised in that** the conveyor belt (4; 4'; 4") in the area of the working strand and the return strand travels over at least one deflection edge (8, 9) which separates two sub-areas (12, 13) in the working strand and in the return strand, a sub-area (12) of the conveyor belt (4; 4") capable of pivoting with respect to the other sub-area (13) around a common vertical axis (14) centrally disposed with respect to one of the deflection edges (8, 9, 8, 21, 8' 21') and when one sub-area (12) of the conveyor belt (4; 4'; 4") pivots (Arrow A), the deflection edges (8, 9; 8, 21; 8', 21') also pivot but through a lesser angle (Arrow B), where the respective angles are in the ratio of 2 : 1.

2. Conveyor device in accordance with claim 1 **characterised in that** the working strand in the conveyor belt (4; 4'; 4") travels round a deflection edge (8, 21; 8', 21'), the deflection edges are capable of commonly pivoting about the central vertical axis (14), and in the return strand of the conveyor belt (4, 4') by the horizontal sweep/ pivoting of at least one auxiliary deflection edge (9, 22; 9', 22') a displaced track may be imparted to the conveyor belt (4, 4') which balances out the displaced track generated by the horizontal sweep of the deflection edges (8, 21; 8', 21')

3. Conveyor device in accordance with claim 1 or 2, **characterised in that** a single endless conveyor belt (4) is provided.

4. Conveyor device in accordance with one of the claims 1 to 3, **characterised in that** the sub-areas (12, 13) of the conveyor belt (4) are capable of pivoting relative to one another about a vertical axis (14), which in the straight-line arrangement of the home position lies in the central longitudinal plane (16) of the conveyor belt (4) and intersects the superimposed deflection edges (8, 9) vertically.

5. Conveyor device in accordance with claim 4, **characterised in that** the pivotable sub-area (12) of the conveyor belt (4) is capable of pivoting around the vertical axis (14) on both sides of the central longitudinal plane (16) by at least 90° when the belt is being driven

6. Conveyor device in accordance with one of the claims 1 to 5, **characterised in that** the pivotable sub-area (12) can be moved to an infinitely variable extent.

7. Conveyor device in accordance with one of the claims 1 to 6, **characterised in that** the feed direction (F) of the endless conveyor belt (4) is reversible.

8. Conveyor device in accordance with one of the claims 1 to 7, **characterised in that** each of the sub-areas (12, 13) of the conveyor belt (4) is supported by a frame unit (17, 18) forming a construction module and both frame units (17, 18) are connected by an articulated joint and form the vertical axis (14).

9. Conveyor device in accordance with one of the claims 1 - 8, **characterised in that** the conveyor belt (4) between its sub-areas (12, 13) of the working and return strands runs through a continuous loop and in the area of the two conveyor loops the portion of the belt extending from the deflection roller (10, 11) to the assigned deflection edge (8, 9) forms an acute angle (19, 20) with the adjacent portion of the belt on the other side of the deflection edge (8, 9).

10. Conveyor device in accordance with claim 9, **characterised in that** the upper belt loop in the area of the working strand runs between two deflection edges (8, 21) which lie parallel to one another in the same plane and only a short distance apart such that when the single sub-area (12) pivots, they also pivot together, the second deflection edge (21) being assigned to either a guidance edge (22) or roller guiding the belt loop.

11. Conveyor device in accordance with one of the claims 1 to 10, **characterised in that** the deflection edges (8, 9, 22, 23) are supported by a common carrying element (25).

12. Conveyor device in accordance with claim 11, **characterised in that** the construction elements forming the belt loop, the pivotable and the fixed-position frame element (17, 18) articulate with one another through a rim bearing (26) and the carrying element (25) for the deflection edges (8, 9, 22 23) is supported on the pivotable frame element (17) by a co-axial rim bearing (27).

13. Conveyor device in accordance with claim 12, **characterised in that** a gear system is provided as a speed-reducing gear unit (28) which when a pivoting movement of the pivotable frame element (17) takes place imparts a similarly directed pivoting movement to the carrying element (25) but with the extent of that movement being reduced in the ratio of 2:1 (Arrows A and B).

14. Conveyor device in accordance with one of the claims 12 to 13, **characterised in that** the carrying element (25) exhibits two opposing vertical members (29, 30) which support the deflection edges (8, 9) in a parallel superimposed position and which by means of a support ring (31) of the carrier rim bearing (27) are capable of pivoting relative to its guidance ring (32) on the pivotable frame element (17) and the pivotable frame unit (17) is carried by a support ring (33) of the frame rim bearing (26) upon its guidance ring (34) from underneath.

15. Conveyor device in accordance with one of the claims 8 - 14, **characterised in that** the deflection roller (10) assigned to the deflection edge (8) of the working strand remains supported in a fixed position when a pivoting movement takes place and the deflection roller (11) assigned to the deflection edge (9) of the return strand is supported by the pivotable frame element (17) in a manner permitting them to pivot in unison.

16. Conveyor device in accordance with one of the claims 14 - 15, **characterised in that** two sprocket wheels (37, 38) are arranged on and fixed to a vertical shaft (36) and have different diameters or numbers of teeth in the ratio of 2: 1 to provide a speed reducing gear (28), where the larger sprocket wheel (37) is connected by a chain (39) with the support ring (33) of the frame rim bearing (26) and the smaller sprocket wheel (38) employs a chain (40) to drive the support ring (31) of the carrier rim bearing (27).

17. Conveyor device in accordance with claim 16, **characterised in that** an actuator is provided which drives the shaft (36) of the speed reduction gear (28).

18. Conveyor device in accordance with one of the claims 1 - 17, **characterised in that** the frame (3) is supported by an additional rim bearing positioned on the floor (2).

19. Conveyor device in accordance with one of the claims 8 to 18, **characterised in that** each of the frame units (17,18) is provided with protective cladding.

20. Conveyor device in accordance with one of the claims 1 to 19, **characterised in that** belt guide members are assigned to the deflection rollers (5, 6, 10, 11; 11', 11", 11"') and / or the deflection edges (8, 9, 21, 22, 23; 8', 9', 21', 22').

21. Conyeyor device in accordance with one of the claims 1 to 20, **characterised in that** this exhibits one or more belt tensioning units in the area of the deflection edges (8, 9, 21, 22, 23; 8', 9', 21', 22') and/or deflection rollers (5, 6, 10, 11; 11', 11", 11"').

22. Conveyor device in accordance with one of the claims 1 to 21, **characterised in that** in the area of the deflection edges (8, 9, 21, 22, 23; 8', 9', 21', 22',) and / or the deflection rollers (5, 6, 10, 11; 11', 11", 11"') this is provided with a discharge opening forming an air cushion for the conveyor belt (4).

23. Conveyor device in accordance with claim 1 or claim 2, **characterised in that** each of the sub-areas (12, 13) is formed by an individually drivable conveyor belt (4'; 4").

24. Conveyor device in accordance with one of the claims 1 to 23, **characterised in that** it is a constituent of a system for distributing or combining material flows consisting of individual items within material flow systems, when dividing a material flow the material items are supplied to a sub-area (13) and then transferred via the pivotable second sub-area to peripheral conveyor units (62, 63, 64, 63', 64'), where the pivotable sub-area (12) can be swept to either side through an angle of up to 90 °.

25. Conveyor device in accordance with claim 24, **characterised in that** to execute the dividing and combining activities the pivotable sub-area (12) is capable of being adjusted by a controlling or regulation feature.

26. Conveyor device in accordance with claim 24 or 25, **characterised in that** at least one sub-area (12, 13) is capable of telescopic movement.

27. Conveyor device in accordance with one of the claims 24 to 26, **characterised in that** at least one sub-area is additionally capable of pivoting to a vertical plane.

28. Conveyor device in accordance with one of the claims 1 to 27, **characterised in that** the sub-areas (12, 13) are provided with a device to regulate the speed of the relevant belt loop.

29. Conveyor device in accordance with one of the claims 1 to 28, **characterised in that** at least the opposing deflection edges (8, 21; 8', 21') in the supply plane in the area of the vertical axis (14) are capable of being individually placed in a vertical position.

## Revendications

1. Dispositif de transport comprenant un bâti (3), deux rouleaux de renvoi principaux (5, 6), dont au moins l'un est entraîné, des rouleaux de renvoi auxiliaires (10, 11) affectés aux rouleaux de renvoi principaux (5, 6) et au moins une bande transporteuse (4) ou un organe de transport sans fin similaire, qui forme entre les rouleaux de renvoi principaux (5, 6) un brin porteur supérieur et un brin de retour inférieur, **caractérisé en ce que** la bande transporteuse (4; 4'; 4'') tourne dans la zone du brin porteur et du brin de retour, respectivement, au moins autour d'une arête déflectrice (8, 9) qui départage, dans le brin porteur et dans le brin de retour, deux zones partielles (12, 13), une zone partielle (12) de la bande transporteuse (4; 4") peut pivoter par rapport à l'autre zone partielle (13) autour d'un axe vertical commun (14) affecté aux arêtes déflectrices (8, 9; 8, 21; 8', 21') en position centrale, et, lors du pivotement (flèche A) de la première zone partielle (12) de la bande transporteuse (4; 4'; 4"), les arêtes déflectrices (8, 9; 8, 21; 8', 21') sont soumises conjointement à un pivotement d'un angle (flèche B) qui est réduit dans le rapport 2:1.

2. Dispositif de transport selon la revendication 1, **caractérisé en ce que** la bande transporteuse (4; 4'; 4'') du brin porteur s'étend à chaque fois sur une arête déflectrice (8, 21; 8', 21'), les arêtes déflectrices peuvent pivoter conjointement autour de l'axe vertical central (14) et, dans le brin de retour de la bande transporteuse (4, 4'), par pivotement d'au moins une arête déflectrice auxiliaire (9, 22; 9', 22'), un trajet oblique compensant le trajet oblique sur les arêtes déflectrices (8, 21; 8', 21') qui ont pivoté est raccordé à la bande transporteuse (4; 4')

3. Dispositif de transport selon la revendication 1 ou 2, **caractérisé en ce qu'**il est prévu une seule bande transporteuse sans fin (4).

4. Dispositif de transport selon l'une quelconque des revendications 1 à 3, **caractérisé en ce que** les zones partielles (12, 13) de la bande transporteuse (4) peuvent pivoter l'une par rapport à l'autre autour d'un axe vertical (14), qui, dans la position de départ alignée droite, est situé dans le plan longitudinal central (16) de la bande transporteuse (4) et coupe perpendiculairement les arêtes déflectrices (8, 9) disposées l'une au-dessus de l'autre.

5. Dispositif de transport selon la revendication 4, **caractérisé en ce que** la zone partielle pivotante (12) de la bande transporteuse (4) peut pivoter autour de l'axe vertical (14) d'au moins 90° des deux côtés du plan longitudinal central tout en entraînant simultanément la bande.

6. Dispositif de transport selon l'une quelconque des revendications 1 à 5, **caractérisé en ce que** la zone partielle pivotante (12) peut être déplacée progressivement.

7. Dispositif de transport selon l'une quelconque des revendications 1 à 6, **caractérisé en ce que** le sens de transport (F) de la bande transporteuse sans fin (4) est réversible.

8. Dispositif de transport selon l'une quelconque des revendications 1 à 7, **caractérisé en ce que** les deux zones partielles (12, 13) de la bande transporteuse (4) sont soutenues à chaque fois par une partie de bâti (17, 18) formant une unité structurelle et les deux parties de bâti (17, 18) sont reliées par articulation en formant l'axe vertical (14).

9. Dispositif de transport selon l'une quelconque des revendications 1 à 8, **caractérisé en ce que** la bande transporteuse (4) parcourt une boucle de bande entre ses zones partielles (12, 13) du brin porteur et du brin de retour et, dans la zone des deux boucles de bande, le tronçon de bande s'étendant respectivement du rouleau de renvoi (10, 11) à l'arête déflectrice affectée (8, 9) inclut à chaque fois un angle aigu (19, 20) avec le tronçon de bande limitrophe d'autre part de l'arête déflectrice (8, 9).

10. Dispositif de transport selon la revendication 9, **caractérisé en ce que** la boucle de bande supérieure s'étend dans la zone du brin porteur entre deux arêtes déflectrices (8, 21), qui sont disposées en regard l'une de l'autre parallèlement à faible distance dans le même plan et, lors du pivotement de la première zone partielle (12), effectuent conjointement un mouvement pivotant, une arête (22), ou selon le cas un rouleau de guidage déviant la boucle de bande étant affecté(e) à la seconde arête déflectrice (21).

11. Dispositif de transport selon l'une quelconque des revendications 1 à 10, **caractérisé en ce que** les arêtes déflectrices (8, 9, 22, 23) sont soutenues sur un support commun (25).

12. Dispositif de transport selon la revendication 11, **caractérisé en ce que** les composants formant la boucle de bande, la partie de bâti pivotante et la partie de bâti fixe (17, 18) sont reliées par articulation par une couronne rotative (26) et le support (25) pour les arétes déflectrices (8, 9, 22, 23) est soutenu sur la partie de bâti pivotante (17) via une couronne rotative coaxiale (27).

13. Dispositif de transport selon la revendication 12, **caractérisé en ce qu'**il est prévu une unité de transmission conformée en réducteur de vitesse (28), qui, lors d'un mouvement pivotant de la partie de bâti pivotante (17), applique au support (25) un mouvement pivotant (flèches A et B) de même sens, mais réduit dans le rapport 2:1.

14. Dispositif de transport selon l'une quelconque des revendications 12 à 13, **caractérisé en ce que** le support (25) présente deux entretoises verticales (29, 30) en regard l'une de l'autre et soutenant les arêtes déflectrices (8, 9) en position superposée parallèle, lesdites entretoises pouvant pivoter sur la partie de bâti pivotante (17) avec un anneau de soutien (31) de la couronne rotative (27) du support par rapport à son anneau de guidage (32) et la partie de bâti pivotante (17) est soutenue sur son anneau de guidage (34) côté sol par un anneau de soutien (33) de la couronne rotative (26) du bâti.

15. Dispositif de transport selon l'une quelconque des revendications 8 à 14, **caractérisé en ce que** le rouleau de renvoi (10) affecté à l'arête déflectrice (8) du brin porteur reste soutenu fixe lors de l'étape de pivotement et le rouleau de renvoi (11) affecté à l'arête déflectrice (9) du brin de retour est supporté à pivotement avec la partie de bâti pivotante (17)

16. Dispositif de transport selon l'une quelconque des revendications 14 à 15, **caractérisé en ce qu'**il est prévu comme réducteur de vitesse (28) deux couronnes dentées (37, 38) aménagées fixes sur un arbre vertical (36) et présentant un diamètre, respectivement un nombre de dents différent dans le rapport 2:1, la couronne dentée la plus grande (37) étant reliée par une chaîne (39) à l'anneau de soutien (33) de la couronne rotative (26) du bâti et la plus petite couronne dentée (38) coopérant avec l'anne de soutien (31) de la couronne rotative (27) du support via une chaîne (40).

17. Dispositif de transport selon la revendication 16, **caractérisé en ce qu'**il est prévu un servomoteur qui entraîne l'arbre (36) du réducteur de vitesse (28).

18. Dispositif de transport selon l'une quelconque des revendications 1 à 17, **caractérisé en ce que** le bâti (3) est supporté sur le sol (2) via une couronne rotative supplémentaire.

19. Dispositif de transport selon l'une quelconque des revendications 8 à 18, **Caractérisé en ce que** les parties de bâti (17, 18) sont à chaque fois pourvues d'un revêtement de protection.

20. Dispositif de transport selon l'une quelconque des revendications 1 à 19, **caractérisé en ce que** des éléments directeurs de bande sont affectés aux rouleaux de renvoi (5, 6, 10, 11; 11', 11'', 11''') et/ou aux arêtes déflectrices (8, 9, 21, 22, 23; 8', 9', 21', 22').

21. Dispositif de transport selon l'une quelconque des revendications 1 à 20, **caractérisé en ce que** celui-ci présente un ou plusieurs tendeurs de bande dans la zone des arêtes déflectrices (8, 9, 21, 22, 23; 8', 9', 21', 22') et/ou des rouleaux de renvoi (5, 6, 10, 11; 11', 11", 11''').

22. Dispositif de transport selon l'une quelconque des revendications 1 à 21, **caractérisé en ce que** celui-ci est pourvu, dans la zone des arêtes déflectrices (8, 9, 21, 22, 23; 8', 9', 21', 22') et/ou des rouleaux de renvoi (5, 6, 10, 11; 11', 11", 11'''), d'ouvertures d'échappement formant un coussin d'air pour la bande transporteuse (4).

23. Dispositif de transport selon la revendication 1 ou 2, **caractérisé en ce que** les zones partielles (12, 13) sont formées à chaque fois d'une seule bande transporteuse (4'; 4") qui peut être entraînée.

24. Dispositif de transport selon l'une quelconque des revendications 1 à 23, **caractérisé en ce qu'**il fait partie d'un système de répartition, respectivement de jonction de courants d'articles divers au sein de systèmes d'écoulement de matériaux, les articles divers sont acheminés, lors de la répartition d'un courant d'articles divers, sur une zone partielle (13), puis transférés via la seconde zone partielle pivotante (12) sur des moyens de transport périphériques (62, 63, 64, 63', 64'), la zone partielle pivotante (12) pouvant pivoter de 90° sur les deux côtés.

25. Dispositif de transport selon la revendication 24, **caractérisé en ce que** la zone partielle pivotante (12) peut être réglée via une commande ou un réglage pour effectuer des répartitions et des jonctions.

26. Dispositif de transport selon la revendication 24 ou 25, **caractérisé en ce qu'**au moins une zone partielle (12, 13) est télescopique.

27. Dispositif de transport selon l'une quelconque des revendications 24 à 26, **caractérisé en ce qu'**au moins une zone partielle peut pivoter en outre dans un plan vertical.

28. Dispositif de transport selon l'une quelconque des revendications 1 à 27, **caractérisé en ce que** les zones partielles (12, 13) sont pourvues d'un réglage commandant la vitesse de la boucle de bande respective.

29. Dispositif de transport selon l'une quelconque des revendications 1 à 28, **caractérisé en ce qu'**au moins les arêtes déflectrices (8, 21; 8', 21') en regard l'une de l'autre dans la plan de transport dans la zone de l'axe vertical (14) peuvent être réglées verticalement individuellement.
